# EUROPEAN PATENT SPECIFICATION

(11) **EP 4 502 645 B1**
(45) Date of publication and mention of the grant of the patent: **22.07.2026**
(21) Application number: 24188791.8
(22) Date of filing: 16.07.2024
(51) Int. Cl.: G01S 7/292, G01S 7/41, G01S 7/539, G01S 13/87, G01S 13/931, G01S 15/86, G01S 15/931, G01S 15/87

(54) **OBJECT DETECTION DEVICE**
OBJEKTERKENNUNGSVORRICHTUNG
DISPOSITIF DE DÉTECTION D'OBJET

(30) Priority: 03.08.2023 JP 2023126815
(43) Date of publication of application: 05.02.2025
(73) Proprietor: Aisin Corporation, Kariya, Aichi 448-8650 (JP)
(72) Inventor: SASSA, Koichi, Aichi, 448-8650 (JP); SAKIUCHI, Takuya, Aichi, 448-8650 (JP)
(74) Representative: TBK

(56) References cited:
- WO-A1-2023/004011
- DE-A1- 102016 215 102
- US-A1- 2017 205 494
- US-A1- 2018 182 243
- US-A1- 2023 001 919

## Description

### TECHNICAL FIELD

This disclosure relates to an object detection device.

### BACKGROUND DISCUSSION

There is an object detection device that detects an object in front of a vehicle and gives a warning to a driver during traveling of the vehicle. For example, in the technique of JP 2021-001 811 A, a moving average value obtained by constant false alarm rate (CFAR) processing is subtracted from a reception signal of a distance measuring unit which transmits and receives an ultrasonic wave, and a variation for each short period is calculated and used as an adaptive threshold. Accordingly, the threshold can be adaptively changed in accordance with an amplitude of an unnecessary reflected wave from a road surface.

However, when the threshold is reduced as in JP 2021-001 811 A, an object that is not desired to be detected, such as a shallow step that does not interfere with the traveling of the vehicle, is detected.

A need thus exists for an object detection device capable of detecting an important target such as a pedestrian even with a weak reflected wave while filtering unnecessary reflected waves.

Document DE 10 2016 215 102 A1 discloses a radar sensor in a vehicle and a method for detecting pedestrians. The information about the size, speed, and distance of a pedestrian's body parts obtained from the radar wave is used to detect a pedestrian.

Document US 2018/182243 A1 discloses an object detection apparatus in which a first association unit associates, based on radar information and camera information, radar objects with at least one camera object that are estimated to be the same as each other. If camera objects are detected so that the camera information includes at least the detection point and the type of each of the camera objects, a determination unit determines whether the camera objects express a common object in accordance with the camera information. A second association unit defines, upon determination that the camera objects express the common object, the camera objects as a camera object group, and associates, if one of the camera objects constituting the camera object group is associated with a target radar object that is one of the radar objects, all the camera objects constituting the camera object group with the target radar object.

Document US 2023/001919 A1 discloses an object detection device which includes first and second detectors each configured to detect an object by transmitting an ultrasonic wave in a moving direction of the moving object and receiving a reflected wave of the ultrasonic wave, a second detector, a memory, and a hardware processor coupled to the memory, and configured to: determine that an obstacle is present in the moving direction of the moving object, based on object detection results by the first and second detectors; determine crossing of the obstacle based on object detection results by the first and second detectors in a state in which it is being determined that the obstacle is present; and cause a driving controller mounted on the moving object, to release driving restriction control of restricting movement of the moving object when determining the crossing, or prohibit the driving controller from releasing the driving restriction control under a predetermined condition.

Document WO 2023/004011 A1 discloses techniques for analyzing radar data to determine that radar noise from one or more target detections potentially conceals additional objects near the target detection. Determining whether an object may be concealed can be based at least in part on a radar noise level based on a target detection, as well as distributions of radar cross sections and/or doppler data associated with particular object types. For a location near a target detection, a radar system may determine estimated noise levels, and compare the estimated noise levels to radar cross section probabilities associated with object types to determine the likelihood that an object of the object type could be concealed at the location. Based on the analysis, the system may determine a vehicle trajectory or otherwise may control a vehicle based on the likelihood that an object may be concealed at the location.

US 2017/205494 A1 discloses an automotive radar with lower threshold for pedestrian recognition, lower than a regular object threshold.

### SUMMARY

It is an object of the present invention to provide an improved object detection device. This object is achieved as indicated in the claim.

The object detection device according to the embodiment can detect an important target such as a pedestrian even with a weak reflected wave while filtering unnecessary reflected waves.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a top view of a vehicle equipped with an object detection device according to an embodiment;
Fig. 2 is a block diagram showing an example of an overall configuration of an object detection system according to the embodiment;
Fig. 3 is a block diagram showing an example of a functional configuration of the object detection device according to the embodiment;
Fig. 4 is a schematic diagram showing an example of an object detection operation performed by the object detection device according to the embodiment;
Fig. 5 is a schematic diagram showing an example of the object detection operation performed by the object detection device according to the embodiment;
Fig. 6 is a schematic diagram showing an example of the object detection operation performed by the object detection device according to the embodiment;
Fig. 7 is a schematic diagram showing an example of the object detection operation performed by the object detection device according to the embodiment;
Fig. 8 is a schematic diagram showing an example of the object detection operation performed by the object detection device according to the embodiment;
Fig. 9 is a flow diagram showing an example of a procedure of object detection processing performed by the object detection device according to the embodiment of the invention as claimed.
Fig. 10 is a flow diagram showing an example of a procedure of object detection processing performed by an object detection device according to a non-claimed modification of the embodiment; and
Fig. 11 is a flow diagram showing an example of a procedure of object detection processing performed by an object detection device according to another non-claimed modification of the embodiment.

### DETAILED DESCRIPTION

Similar components in the following exemplary embodiment and the like are denoted by the same reference numerals, and redundant description thereof will be appropriately omitted. Configuration Example of Vehicle

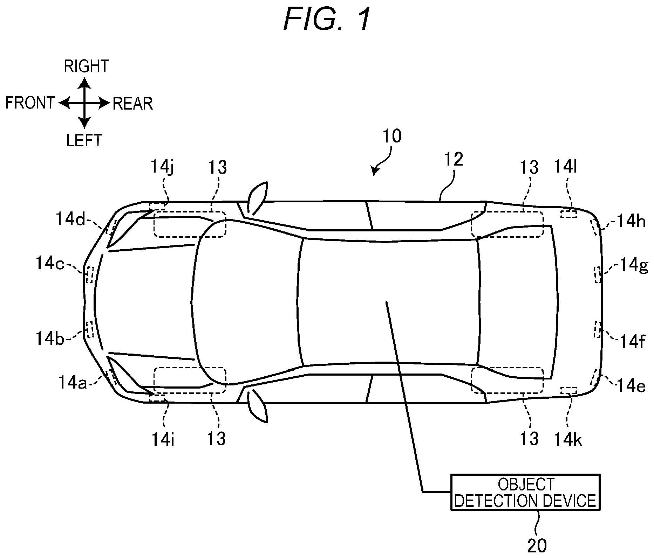

Fig. 1 is a top view of a vehicle 10 equipped with an object detection device 20 according to an embodiment. The front, rear, left, and right of the vehicle 10 in Fig. 1 indicate directions when viewed from a driver seat of the vehicle 10.

The vehicle 10 according to the embodiment may be, for example, an internal combustion engine automatic vehicle using an internal combustion engine as a drive source, may be an electric automatic vehicle or a fuel cell automatic vehicle using an electric motor as a drive source, or may be a hybrid automatic vehicle using both of the internal combustion engine and the electric motor as a drive source.

The vehicle 10 can be equipped with various transmission devices, and can also be equipped with various devices such as systems and components necessary for driving the internal combustion engine or the electric motor. A system, the number, a layout, and the like of devices related to driving of wheels 13 of the vehicle 10 can be set in various manners.

As shown in Fig. 1, the vehicle 10 includes a vehicle body 12, a plurality of wheels 13, and a plurality of distance measuring units 14a to 14l. When it is not necessary to distinguish the distance measuring units 14a to 14l, the distance measuring units 14a to 14l are simply referred to as a distance measuring unit 14.

The vehicle body 12 forms a vehicle compartment in which an occupant enters. The plurality of wheels 13 and the plurality of distance measuring units 14 are attached to the vehicle body 12. In the example of Fig. 1, the vehicle body 12 includes four wheels 13 and twelve distance measuring units 14. However, the number of the distance measuring units 14 attached to the vehicle body 12 is free.

The four wheels 13 are provided on the front, rear, left and right sides of the vehicle body 12. The two front wheels 13 function, for example, as steering wheels, and the two rear wheels 13 function, for example, as driving wheels.

The distance measuring units 14 are sonars provided at, for example, an outer peripheral portion of the vehicle 10, transmitting sound waves such as ultrasonic waves, and receiving reflected waves reflected by a target such as an obstacle present around the vehicle 10. The distance measuring units 14 may be radars that transmits an electromagnetic wave such as a laser beam, a millimeter wave radar, and the like.

The distance measuring unit 14 outputs information on the received reflected wave to the object detection device 20. The distance measuring unit 14 collects, for example, a response time, which is a time from the transmission of the ultrasonic wave to the reception of the reflected wave, as information for specifying a distance between a target and the vehicle 10. The object detection device 20 can detect the presence or absence of the obstacle around the vehicle 10 and the distance to the obstacle based on the information collected by the distance measuring unit 14.

When a plurality of reflected waves reflected by a plurality of positions of the target are received in response to one time of the transmission of the ultrasonic wave, the distance measuring unit 14 may include, in the information, only the response time of the reflected wave received earliest.

The distance measuring units 14a to 14d are provided at front portions of the vehicle body 12. Among the distance measuring units 14a to 14d, the distance measuring units 14b and 14c are also referred to as front sonars, and are provided at front end portions of the vehicle 10. The distance measuring units 14b and 14c receive reflected waves from a target in front of the vehicle 10. The distance measuring units 14a and 14d are also referred to as corner sonars, and are provided at corner portions on the front portions of the vehicle 10. The distance measuring units 14a and 14d receive reflected waves from a target on the front and outside of the vehicle 10.

The distance measuring units 14e to 14h are provided at rear portions of the vehicle body 12. Among the distance measuring units 14e to 14h, the distance measuring units 14f and 14g are also referred to as rear sonars, and are provided at rear end portions of the vehicle 10. The distance measuring units 14f and 14g receive reflected waves from a target behind the vehicle 10. The distance measuring units 14e and 14h are also referred to as corner sonars, and are provided at corner portions on the rear portions of the vehicle 10. The distance measuring units 14e and 14h receive reflected waves from a target on the rear and outside of the vehicle 10.

The distance measuring units 14i to 14l are also referred to as side sonars, and are provided at side portions of the vehicle body 12. Among the distance measuring units 14i to 14l, the distance measuring units 14i and 14j are provided on the front part side of the vehicle 10. The distance measuring units 14k and 14l are provided on the rear part side of the vehicle 10. The distance measuring units 14i to 14l receive reflected waves from a target on the side of the vehicle 10.

In addition to the plurality of distance measuring units 14a to 14l described above, a plurality of imaging units capable of imaging the surroundings of the vehicle 10 may be provided on the vehicle 10.

### Configuration Example of Object Detection System

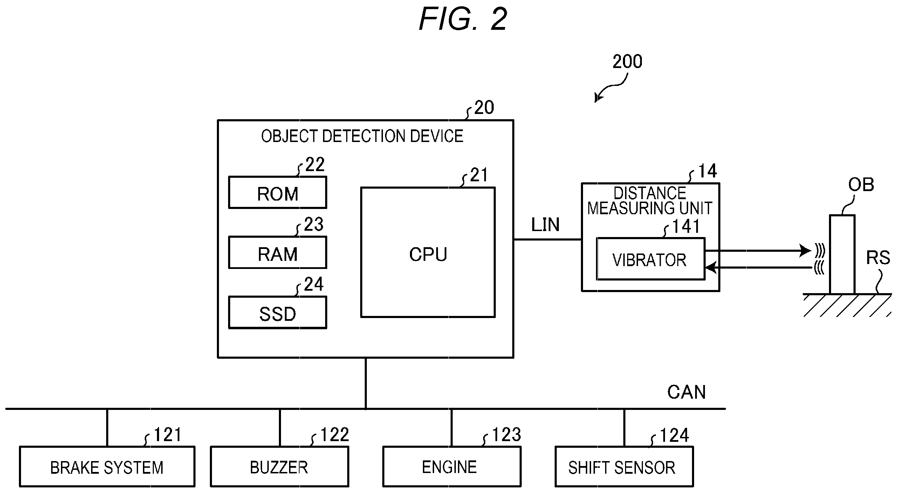

Fig. 2 is a block diagram showing an example of an overall configuration of an object detection system 200 according to the embodiment. The object detection system 200 is equipped on, for example, the vehicle 10, detects an object based on information output from the distance measuring unit 14, and controls the vehicle 10 based on a detection result of the object.

As shown in Fig. 2, the object detection system 200 includes the object detection device 20, the plurality of distance measuring units 14, a brake system 121, a buzzer 122, and an engine 123.

The object detection device 20 and the plurality of distance measuring units 14 are connected to each other by a local interconnect network (LIN) which is an in-vehicle network. The object detection device 20, the brake system 121, the buzzer 122, the engine 123, and a shift sensor 124 are connected to one another by a controller area network (CAN) which is the in-vehicle network.

The distance measuring units 14 each include a vibrator 141 implemented using a piezoelectric element and the like, an amplifier (not shown), and the like, and can transmit and receive an ultrasonic wave by the vibration of the vibrator 141. Specifically, the distance measuring unit 14 transmits the ultrasonic wave generated according to the vibration of the vibrator 141, and detects the vibration of the vibrator 141 caused by a reflected wave which is the transmitted ultrasonic wave reflected by an object such as a target OB and a road surface RS. The vibration of the vibrator 141 is converted into an electric signal, and based on the electric signal, it is possible to acquire a time of flight (TOF) of the ultrasonic wave corresponding to a distance from the distance measuring unit 14 to the target OB, Doppler shift information corresponding to a relative speed between the vehicle 10 and the target OB, and the like.

In the example shown in Fig. 2, the configuration in which both the wave transmission and the wave reception are performed using the single vibrator 141 is shown, but the configuration of the distance measuring unit 14 is not limited thereto. For example, as in a configuration in which a vibrator for wave transmission and a vibrator for wave reception are separately provided, the transmission side and the reception side may be separated from each other.

The object detection device 20 is an electronic control unit (ECU) and the like that detects an obstacle and the like around the vehicle 10 based on information from the distance measuring unit 14 and controls the vehicle 10. The object detection device 20 can receive various types of information from the distance measuring unit 14 via the LIN. In addition, the object detection device 20 can control the brake system 121, the engine 123, and the like by transmitting a control signal via the CAN, and can output sound to the buzzer 122.

The object detection device 20 includes a central processing unit (CPU) 21, a read only memory (ROM) 22, a random access memory (RAM) 23, and a solid state drive (SSD) 24.

The CPU 21 can execute various types of calculation processing and control such as detection of an object, determination of presence or absence of interference with an object, and output processing of an alarm to the buzzer 122, . The ROM 22 is a non-volatile storage device. The ROM 22 stores a program in advance. The CPU 21 can read the program stored in the ROM 22 and execute the calculation processing according to the program.

The RAM 23 temporarily stores various types of data used in the calculations of the CPU 21. The SSD 24 is a rewritable non-volatile storage unit, and can store data even when a power of the object detection device 20 is turned off.

The CPU 21, the ROM 22, the RAM 23, and the like may be integrated in the same package. The object detection device 20 may be implemented by using another logical operation processor such as a digital signal processor (DSP), a logic circuit, and the like instead of the CPU 21. In addition, a hard disk drive (HDD) may be provided instead of the SSD 24, and the SSD 24 or the HDD may be provided separately from the object detection device 20.

The brake system 121 is, for example, an anti-lock brake system (ABS) that prevents locking of a brake, an anti-skid device (electronic stability control (ESC)) that prevents skidding of the vehicle 10 during cornering, an electric brake system that enhances a braking force and executes a brake assist, and brake by wire (BBW).

The engine 123 is a motor that drives the vehicle 10.

The buzzer 122 is provided inside the vehicle 10 and outputs an alarm.

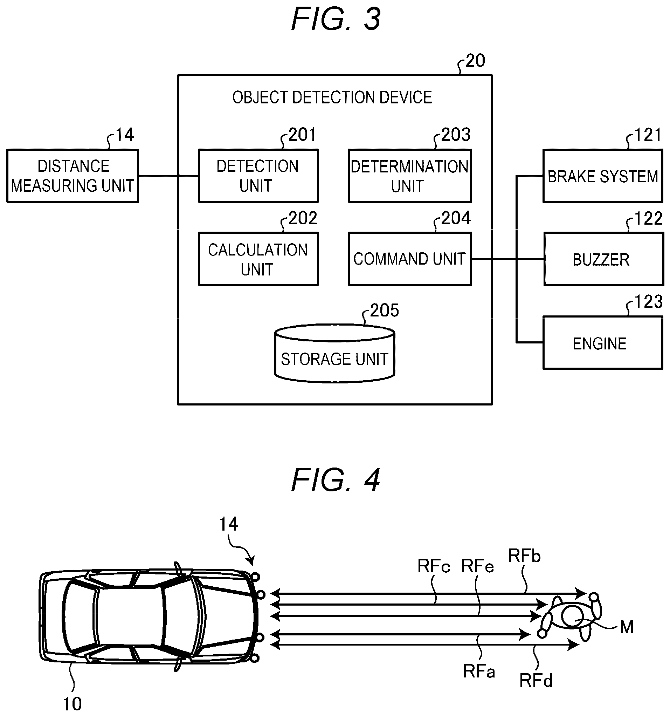

Fig. 3 is a block diagram showing an example of a functional configuration of the object detection device 20 according to the embodiment. As shown in Fig. 3, the object detection device 20 includes a detection unit 201, a calculation unit 202, a determination unit 203, a command unit 204, and a storage unit 205 as functional units.

These functional units are implemented, for example, by the CPU 21 reading the program stored in the storage device such as the ROM 22, and loading the program on the RAM 23 and executing the program. A part or all of the functional units may be implemented by hardware such as a circuit including an application specific integrated circuit (ASIC).

The detection unit 201 acquires information related to transmission and reception of an ultrasonic wave of the distance measuring unit 14. When a reflected wave exceeding an automatic threshold is received from a wave reception signal of the distance measuring unit 14, the detection unit 201 detects the reflected wave. The automatic threshold is background noise calculated based on the reflected wave received by the distance measuring unit 14. As a specific calculation method of the automatic threshold, for example, at least one of general algorithms used in CFAR processing can be used.

The calculation unit 202 obtains a position of the object with respect to the vehicle 10 based on the reflected wave detected by the detection unit 201. When a plurality of reflected waves exceeding the automatic threshold are detected at the same time, a distance between objects, which is obtained based on the reflected waves, is calculated. Further, coordinates of the objects with respect to the vehicle 10 are obtained based on the reflected waves, and a position difference between the objects is calculated.

The determination unit 203 determines whether the reflected wave detected by the detection unit 201 is used for object detection in the object detection device 20.

Here, among obstacles that may interfere with traveling of the vehicle 10, a pole and a step equal to or higher than a predetermined height have a relatively simple appearance. Usually, it is considered that a relatively strong singular reflected wave generated by a single reflection is often returned. On the other hand, a pedestrian, a bicycle, and the like have a complicated shape, and a plurality of relatively weak reflected waves generated by multiple reflections are often returned.

Therefore, the determination unit 203 determines whether the plurality of reflected waves with an intensity exceeding the automatic threshold are detected at the same time, and when the plurality of reflected waves are detected, the determination unit 203 determines, based on the reflected waves, whether the distance and the position difference between the plurality of objects specified by the calculation unit 202 are within predetermined thresholds.

When the distance and the position difference between the objects are within the predetermined thresholds, it is shown that these objects are sufficiently close to each other. These objects are not a plurality of independent targets, and are considered to correspond to different sites of one target such as a pedestrian or a bicycle. That is, it is considered that the plurality of detected reflected waves are multiple reflections from a plurality of sites on one single target.

On the other hand, when a singular reflected wave exceeding the automatic threshold is detected, there is a high possibility that the reflected wave is generated by a single reflection from a target having a simple appearance such as a pole. In addition, even when any one of the distance and the position difference between the objects specified based on the plurality of reflected waves exceeds the corresponding threshold, there is a possibility that the reflected wave is a reflected wave generated by a single reflection from each of the plurality of targets having a simple appearance.

Accordingly, when the intensity of the reflected wave is equal to or larger than a threshold applied to a single reflected wave, the determination unit 203 determines to use the reflected wave for the object detection.

However, when the intensity of the reflected wave as described above is less than the threshold applied to the single reflected wave, it is considered that the reflected wave is noise from a target that does not interfere with the traveling of the vehicle 10, such as unevenness of a road surface. Accordingly, the determination unit 203 determines not to use the reflected waves for the object detection. In this case, the reflected waves are filtered and removed.

When the position of the target calculated by the calculation unit 202 is in a positional relationship in which the target can interfere with the vehicle 10 after a predetermined time elapses, based on a reflected wave generated by multiple reflections or a single reflection, the command unit 204 controls each unit of the vehicle 10 to avoid the interference between the vehicle 10 and the target.

More specifically, the command unit 204 transmits a command to the buzzer 122 to output an alarm to the driver. In addition, the command unit 204 transmits the command to the brake system 121 to apply braking. Accordingly, the vehicle 10 can be decelerated or stopped.

The command unit 204 may transmit the command to the engine 123 instead of or in addition to the braking performed by the brake system 121, to reduce the output of the engine 123. Accordingly, the vehicle 10 can also be decelerated or stopped.

The storage unit 205 stores a control program and various control parameters necessary for the operation of the object detection device 20. In addition, the storage unit 205 stores a plurality of thresholds used by the determination unit 203 for various types of determinations.

### Operation Example of Object Detection Device

Next, an operation example of the object detection device 20 according to the embodiment will be described with reference to Figs. 4 to 9. Figs. 4 to 9 are schematic diagrams showing an example of an object detection operation performed by the object detection device 20 according to the embodiment.

Fig. 4 shows a state in which, when the vehicle 10 is moving forward, the plurality of distance measuring units 14 on the front side of the vehicle 10 transmit ultrasonic waves to a pedestrian M crossing the front of the vehicle 10 and receive reflected waves. As shown in Fig. 4, since the pedestrian M has a complicated shape, the transmitted ultrasonic waves are multiple-reflected and received by the distance measuring units 14. In the example of Fig. 4, reflected waves RFa, RFb, RFc, RFd, and RFe are generated by the ultrasonic waves hitting the left hand, the right hand, the left foot, the right foot, and the trunk of the pedestrian M.

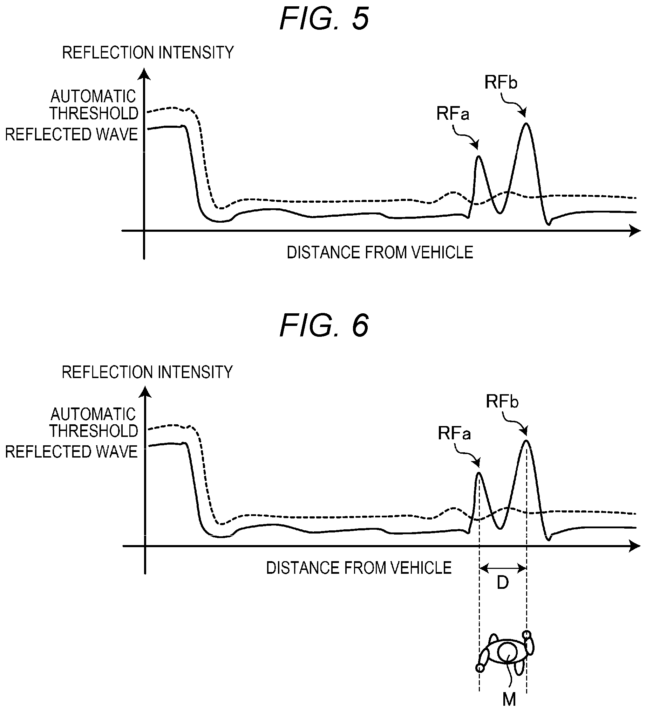

Fig. 5 shows an example of a wave reception signal of the distance measuring unit 14 detected by the detection unit 201 in the above case. In Fig. 5, a horizontal axis represents a distance from the vehicle 10, and a vertical axis represents a reflection intensity of the wave reception signal. In the object detection device 20 according to the embodiment, as described above, the automatic threshold is set by, for example, the CFAR processing based on the wave reception signal obtained from the distance measuring unit 14. The reflected wave having an intensity less than the automatic threshold is filtered and removed as, for example, background noise such as unevenness of a road surface.

In the example of Fig. 5, among the reflected waves RFa to RFe from respective sites of the pedestrian M, the reflected wave RFa reflected by hitting the left hand and the reflected wave RFb reflected by hitting the right hand have an intensity exceeding the automatic threshold. In this case, the determination unit 203 determines that a plurality of reflected waves RFa and RFb exceeding the automatic threshold are detected.

As shown in Fig. 6, when the plurality of reflected waves RFa and RFb exceeding the automatic threshold are detected, the calculation unit 202 obtains a distance from the object specified based on the reflected wave RFa to the vehicle 10. In addition, the calculation unit 202 obtains a distance from the object specified based on the reflected wave RFb to the vehicle 10. Accordingly, the distance from each object to the vehicle 10 can be obtained from, for example, the wave reception signal of one distance measuring unit 14. As described above, distances to the vehicle 10 from the left hand and the right hand of the pedestrian M at a predetermined time are obtained.

The reflected waves RFa and RFb are examples of first and second reflected waves. The left hand and the right hand of the pedestrian M are examples of first and second objects. The distances from the left hand and the right hand of the pedestrian M to the vehicle 10 are examples of first and second distances.

The calculation unit 202 further obtains a difference D between the distance from the object corresponding to the reflected wave RFa to the vehicle 10 and the distance from the object corresponding to the reflected wave RFb to the vehicle 10. Accordingly, a distance between the left hand and the right hand of the pedestrian M is obtained. The determination unit 203 determines whether the difference D between the distances calculated by the calculation unit 202 is equal to or less than a predetermined threshold.

The threshold at this time is set in advance based on an average size of a target in which multiple reflections of the pedestrian M or the bicycle are likely to occur. More specifically, the threshold is set based on a two-dimensional size that coincides with a traveling direction of the vehicle 10 in the target such as the pedestrian M. The threshold applied to the difference D between the distances calculated by the calculation unit 202 is an example of a first threshold.

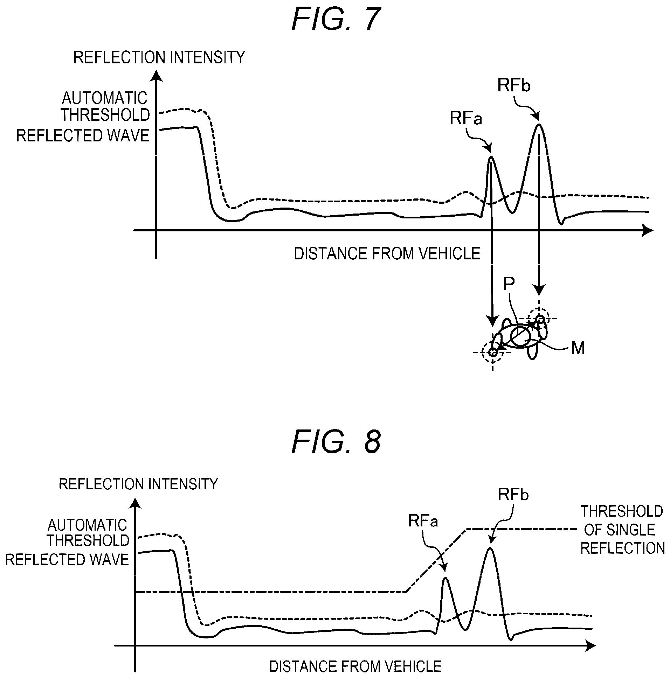

As shown in Fig. 7, the calculation unit 202 also obtains a coordinate of the object specified based on the reflected wave RFa with respect to the vehicle 10. In addition, the calculation unit 202 obtains a coordinate of the object specified based on the reflected wave RFb with respect to the vehicle 10. Accordingly, the coordinates of the objects with respect to the vehicle 10 can be obtained by, for example, triangulation method based on the wave reception signals of the plurality of distance measuring units 14.

From the above calculation, three-dimensional position coordinates of the left hand and the right hand of the pedestrian M with respect to the vehicle 10 at a predetermined time are obtained. The coordinates of the left hand and the right hand of the pedestrian M with respect to the vehicle 10 are examples of first and second coordinates.

The calculation unit 202 further obtains a position difference P between the coordinate of the object corresponding to the reflected wave RFa with respect to the vehicle 10 and the coordinate of the object corresponding to the reflected wave RFb with respect to the vehicle 10. Accordingly, a position difference between the left hand and the right hand of the pedestrian M is obtained. That is, the position difference P can be represented as, for example, that two coordinates are separated by a distance x in an X direction and separated by a distance y in a Y direction. The determination unit 203 determines whether the position difference P calculated by the calculation unit 202 is equal to or less than a predetermined threshold.

The threshold at this time is also set in advance based on an average size of a target in which multiple reflections of the pedestrian M or the bicycle are likely to occur. More specifically, the threshold is set based on a three-dimensional size represented by XY coordinates and the like of the target such as the pedestrian M with respect to the vehicle 10. The threshold applied to the position difference P calculated by the calculation unit 202 is an example of a second threshold.

When the plurality of reflected waves exceeding the automatic threshold are detected and the distance and the position difference between the plurality of objects based on the reflected waves are within the predetermined thresholds, the reflected waves are considered to be generated by multiple reflections from one target having a complicated shape such as the pedestrian M. Accordingly, the determination unit 203 determines to use the reflected waves for the object detection even when the reflected waves are weak.

On the other hand, when a singular reflected wave exceeding the automatic threshold is detected, as described above, there is a possibility that the singular reflected wave is generated by a single reflection from a target having a simple shape such as a pole. In addition, when the plurality of reflected waves exceeding the automatic threshold are detected, even when at least one of the distance and the position difference between the objects specified based on the reflected waves exceeds the corresponding threshold, there is a possibility that the reflected waves generated by the single reflection from the plurality of targets are detected at the same time.

As shown in Fig. 8, the determination unit 203 determines whether such a reflected wave is less than a predetermined threshold set in advance in order to detect a single reflection.

An intensity of the reflected wave generated by the single reflection is usually larger than that of a reflected wave generated by multiple reflections from the pedestrian M and the like. Accordingly, the threshold at this time is set based on an average intensity of the reflected wave generated by the single reflection. In addition, since the intensity of the reflected wave generated by the single reflection may vary according to a distance from the vehicle 10, different values are set according to the distance from the vehicle 10 as the threshold applied to the single reflection. The threshold set for detecting the single reflected wave is an example of a third threshold.

When the singular reflected wave exceeding the automatic threshold is equal to or more than the threshold applied to the single reflected wave, the determination unit 203 determines to use the reflected wave for the object detection. On the other hand, when the singular reflected wave exceeding the automatic threshold is less than the threshold applied to the single reflected wave, the determination unit 203 determines not to use the reflected wave for the object detection.

Even when at least one of the distance and the position difference between the objects specified based on the plurality of reflected waves exceeds the corresponding threshold, there is a possibility that the reflected waves generated by the single reflection from the plurality of targets are detected at the same time. Accordingly, in this case, the determination unit 203 also determines whether each of the reflected waves is less than the threshold applied to the single reflected wave.

When any of the plurality of reflected waves exceeding the automatic threshold is equal to or more than the threshold applied to the single reflected wave, the determination unit 203 determines to use the reflected wave for the object detection. At this time, when some or all of the plurality of reflected waves have an intensity equal to or larger than the threshold, it means that the independent targets the number of which is equal to the number of detected reflected waves are detected.

On the other hand, when any of the plurality of reflected waves exceeding the automatic threshold is less than the threshold applied to the single reflected wave, the determination unit 203 determines not to use the reflected wave for the object detection. In this case, the reflected wave is filtered and removed.

As described above, an operation of the object detection device 20 according to the embodiment at a predetermined time ends.

### Processing Example of Object Detection Device

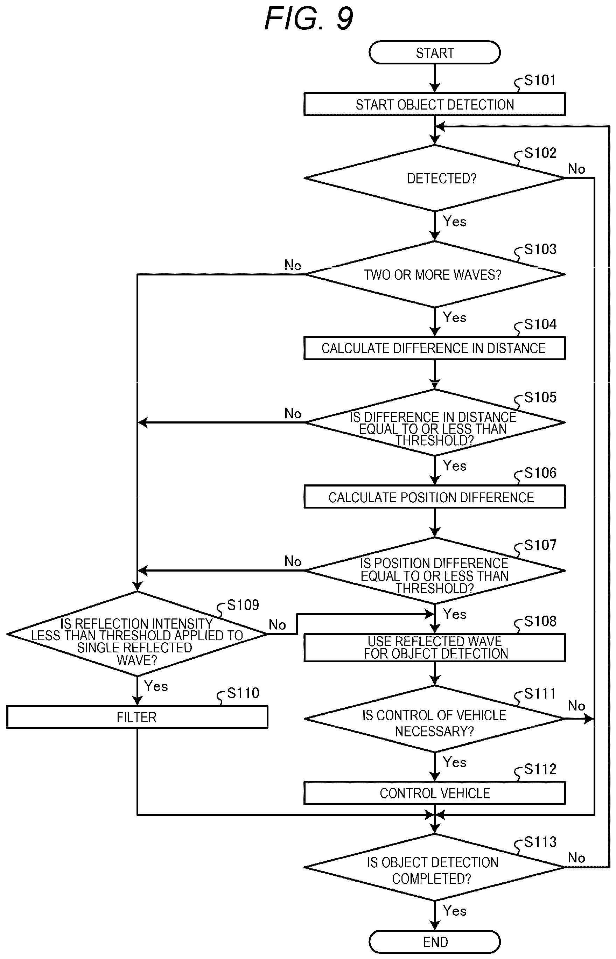

Next, an example of object detection processing performed by the object detection device 20 according to the embodiment of the invention as claimed will be described with reference to Fig. 9. Fig. 9 is a flow diagram showing an example of a procedure of the object detection processing performed by the object detection device 20 according to the embodiment.

As shown in Fig. 9, for example, when the vehicle 10 starts traveling at a predetermined speed, the object detection device 20 starts the object detection processing (step S101). In response to this, the detection unit 201 acquires a wave reception signal from the distance measuring unit 14 and monitors whether a reflected wave exceeding the automatic threshold is detected (step S102). When no reflected wave exceeding the automatic threshold is detected (step S102: No), the processing at this time is completed, and the processing proceeds to step S113.

When a reflected wave exceeding the automatic threshold is detected by the detection unit 201 (step S102: Yes), the determination unit 203 determines whether the detected reflected wave is two or more waves (step S103).

When the determination unit 203 determines that two or more reflected waves are detected (step S103: Yes), the calculation unit 202 obtains a difference in distance between the plurality of objects specified based on the reflected waves (step S104).

The determination unit 203 determines whether the difference in distance between the plurality of objects obtained by the calculation unit 202 is equal to or less than a corresponding threshold (step S105). When the determination unit 203 determines that the difference in distance between the plurality of objects is equal to or less than the predetermined threshold (step S105: Yes), the calculation unit 202 obtains coordinates of the plurality of objects specified based on the reflected waves with respect to the vehicle 10, and obtains a position difference between the objects based on the coordinates (step S106).

The determination unit 203 determines whether a position difference between the plurality of objects obtained by the calculation unit 202 is equal to or less than a corresponding threshold (step S107). When the position difference between the plurality of objects is equal to or less than the predetermined threshold (step S107: Yes), the determination unit 203 determines to use the reflected waves for the object detection (step S108).

On the other hand, when a singular reflected wave is detected by the detection unit 201 (step S103: No), the plurality of reflected waves are detected by the detection unit 201, but when a difference in distance between the plurality of objects based on the reflected waves exceeds the corresponding threshold (step S105: No), or when a position difference between the plurality of objects based on the reflected waves exceeds the corresponding threshold (step S107: No), the determination unit 203 determines whether the reflected waves are less than the threshold applied to the single reflected wave for the detected singular reflected wave or each of the plurality of reflected waves (step S109).

When any one of the reflected waves is less than the threshold of the single reflected wave (step S109: Yes), the determination unit 203 determines not to use the reflected wave for the object detection, and accordingly, the reflected wave is filtered and removed (step S110). When any one of the reflected waves is equal to or more than the threshold of the single reflected wave (step S109: No), the determination unit 203 determines to use the reflected wave for the object detection (step S108).

When there is a reflected wave determined to be used for the object detection, the determination unit 203 determines whether control of the vehicle 10 is necessary based on a positional relationship of the object based on the reflected waves with respect to the vehicle 10 (step S111).

When the object corresponding to the reflected wave is at a position where the object can interfere with the vehicle 10, for example, after a predetermined time, the determination unit 203 determines that the control of the vehicle 10 is necessary to avoid the interference with the object (step S111: Yes). The command unit 204 controls each unit of the vehicle 10 based on the determination result (step S112).

At this time, the command unit 204 performs at least one of outputting a warning from the buzzer 122 inside the vehicle compartment to alert the driver, applying braking to the vehicle 10 by the brake system 121, and decelerating the vehicle 10 by reducing the output of the engine 123.

When the object corresponding to the reflected wave is at a position where the object does not interfere with the vehicle 10, for example, after a predetermined time, the determination unit 203 determines that the control of the vehicle 10 is not necessary (step S111: No), and the processing of step S112 is skipped.

Thereafter, when the vehicle 10 is traveling at a predetermined speed or faster, the object detection device 20 continues the object detection processing (step S113: No), and repeats the processing from step S102. In addition, when the vehicle 10 is stopped, the object detection processing is completed (step S113).

As described above, the object detection processing performed by the object detection device 20 according to the embodiment ends.

### Overview

In an object detection device that detects an object around a vehicle, an automatic threshold obtained by CFAR processing and the like is used for filtering and removing, as background noise, a reflected wave from an object such as unevenness of a road surface that does not interfere with traveling of a vehicle.

However, when the filtering and the removal are uniformly performed using the automatic threshold, a weak reflected wave generated by multiple reflections from a target having a complicated shape such as a pedestrian may be filtered. Accordingly, the reflected wave from the pedestrian and the like and the reflected wave due to the background noise and the like may be detected with a relatively close intensity, and it is difficult to distinguish the reflected waves.

According to the object detection device 20 of the embodiment, when the reflected wave includes two or more reflected waves exceeding an automatic threshold set based on the background noise, the calculation unit 202 obtains, based on one reflected wave, a distance between the vehicle 10 and the corresponding object, obtains, based on the other reflected wave, a distance between the vehicle 10 and the corresponding object, and obtains a difference between the distances. The determination unit 203 uses the reflected waves for object detection when the difference between the distances is equal to or less than a predetermined threshold corresponding thereto.

As described above, it is possible to determine whether the reflected waves are generated by multiple reflections from different sites of one target, and it is possible to determine whether the background noise and the like is to be filtered and removed. Accordingly, it is possible to detect an important target such as a pedestrian even with a weak reflected wave while filtering unnecessary reflected waves.

According to the object detection device 20 of the embodiment, when the reflected wave includes two or more reflected waves exceeding an automatic threshold set based on the background noise, the calculation unit 202 obtains, based on one reflected wave, a coordinate of the corresponding object with respect to the vehicle 10, obtains, based on the other reflected wave, a coordinate of the corresponding object with respect to the vehicle 10, and obtains a position difference according to the coordinates., the determination unit 203 uses the reflected waves for the object detection when the difference in distance is equal to or less than the corresponding threshold and the position difference according to the coordinates is equal to or less than the corresponding predetermined threshold.

As described above, by determining the position difference between the objects in addition to the difference in distance between the plurality of objects, it is possible to more precisely determine whether the reflected waves are generated by multiple reflections from different sites of one target.

According to the object detection device 20 of the embodiment, when the difference in distance between the plurality of objects is larger than the corresponding threshold or the position difference in coordinate between the plurality of objects exceeds the corresponding threshold, the determination unit 203 uses the reflected waves for the object detection when the reflection intensity of the reflected waves is less than a threshold set to a value larger than the automatic threshold for detecting the single reflected wave.

Accordingly, even when a plurality of targets that are independently present are actually present, the targets can be detected. In addition, after clearly determining that the plurality of detected reflected waves are not reflected waves generated by multiple reflections, a threshold applied to a single reflected wave can be used to determine whether the reflected waves are to be filtered and removed as background noise and the like.

In the above embodiment, when the plurality of reflected waves are detected at the same time, the calculation unit 202 obtains the difference in distance and the position difference between the plurality of objects based on the reflected waves, and the determination unit 203 determines whether the difference in distance and the position difference between the plurality of objects are equal to or less than the corresponding thresholds.

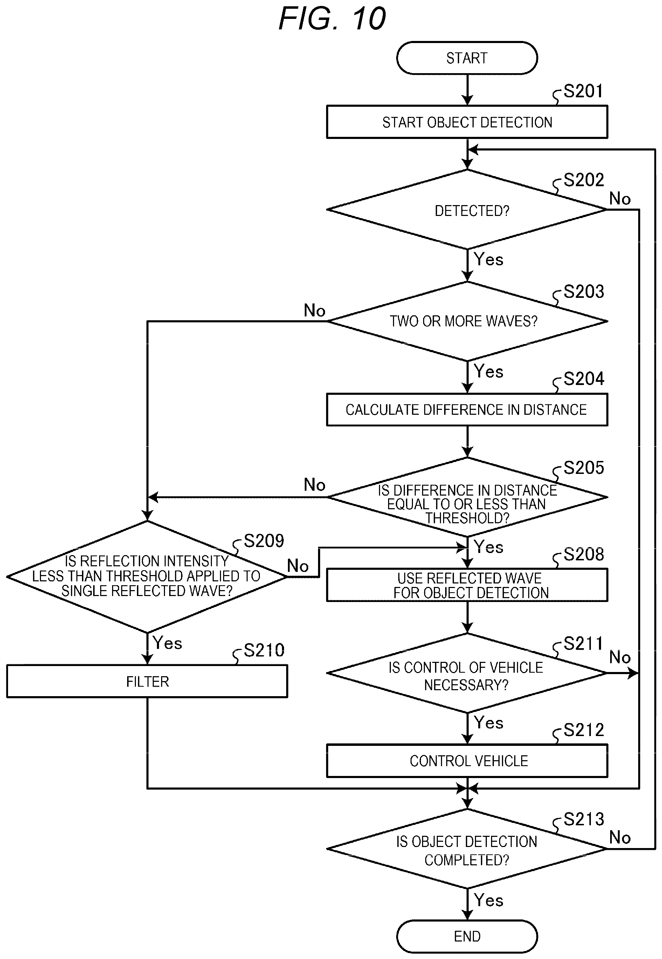

Fig. 10 is a flow diagram showing an example of a procedure of object detection processing performed by an object detection device according to another non-claimed modification of the embodiment. The processing of steps S201 to S205 and the processing of steps S208 to S213 in Fig. 10 respectively correspond to the processing of steps S101 to S105 and the processing of steps S108 to S113 in Fig. 9 of the above embodiment. Accordingly, in the example of Fig. 10, when a plurality of reflected waves are detected at the same time, it is determined whether the reflected waves are generated by multiple reflections without determining a position difference between a plurality of objects.

When three-dimensional coordinates are obtained for the plurality of objects and a position difference is determined based on the obtained three-dimensional coordinates, a load of internal processing of the object detection device may be increased. In the example shown in Fig. 10, since such processing is not performed, the load of the object detection device is reduced, and it is possible to more easily determine whether the plurality of reflected waves are to be filtered and removed.

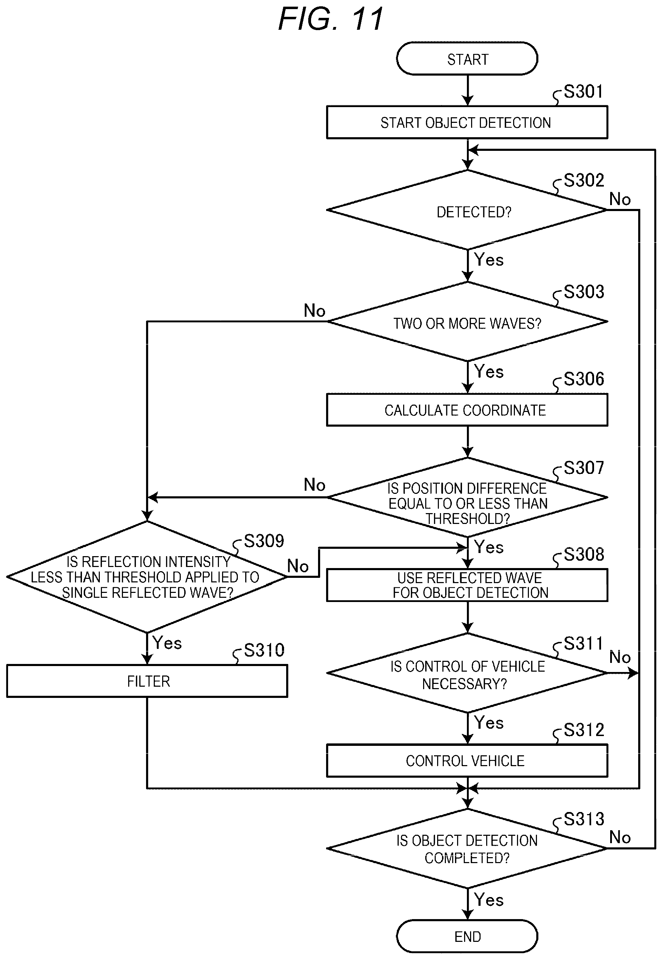

Fig. 11 is a flow diagram showing an example of a procedure of object detection processing performed by an object detection device according to another non-claimed modification of the embodiment. The processing of steps S301 to S303 and the processing of steps S306 to S313 in Fig. 11 respectively correspond to the processing of steps S101 to S103 and the processing of steps S106 to S113 in Fig. 9 of the above embodiment. Accordingly, in the example of Fig. 11, when a plurality of reflected waves are detected at the same time, it is determined whether the reflected waves are generated by multiple reflections without determining a difference in distance between a plurality of objects.

By obtaining three-dimensional coordinates for the plurality of objects and determining a position difference based on the obtained three-dimensional coordinates, a degree of proximity between the plurality of objects can be obtained more precisely compared with a case where a difference in two-dimensional distance between the plurality of objects is used. Accordingly, sufficient determination accuracy can be obtained without determining the difference in two-dimensional distance between the plurality of objects.

In the above embodiment, the determination is performed using both the difference in two-dimensional distance and the three-dimensional position difference between the plurality of objects, thereby further improving the determination accuracy than that in the examples of Figs. 10 and 11.

Accordingly, when determining whether the plurality of reflected waves are generated by the multiple reflections, it is possible to freely determine to use a combination of the difference in two-dimensional distance and the three-dimensional position difference between the plurality of objects according to the type, the specification, the traveling environment, and the like of the vehicle 10.

## Claims

1. An object detection device (20) of a vehicle comprising:
a detection unit (201) provided in the vehicle (10) and configured to detect that a reflected wave (RFa, RFb, RFc, RFd, and RFe) reflected by an object (M) around the vehicle (10) is received by a distance measuring unit (14), included in the vehicle (10), that is configured to transmit and receive a sound wave or a radio wave, and that outputs information on the received reflected wave to the object detection device (20);
a calculation unit (202) configured to obtain a position of the object (M) with respect to the vehicle (10) based on the reflected wave (RFa, RFb, RFc, RFd, and RFe); and
a determination unit (203) configured to determine whether to use the reflected wave (RFa, RFb, RFc, RFd, and RFe) for object detection based on a calculation result of the calculation unit (202), wherein
when the reflected wave (RFa, RFb, RFc, RFd, and RFe) is a reflected wave that exceeds an automatic threshold, the automatic threshold being set based on background noise calculated based on the reflected wave (RFa, RFb, RFc, RFd, and RFe) using algorithms of a constant false alarm rate, CFAR, processing, wherein the reflected wave (RFa, RFb, RFc, RFd, and RFe) includes a first reflected wave reflected by a first object and a second reflected wave reflected by a second object, received at the same time, the calculation unit (202) is configured
to conduct a first process comprising
obtaining a distance between the first object and the vehicle (10) based on the first reflected wave and setting the distance as a first distance,
obtaining a distance between the second object and the vehicle (10) based on the second reflected wave and setting the distance as a second distance, and
obtaining a difference between the first distance and the second distance,
**characterized in that**
the calculation unit (202) is configured
to conduct, when in the first process the difference (D) between the first distance and the second distance is equal to or less than a first predetermined threshold, a second process comprising
obtaining a coordinate of the first object with respect to the vehicle (10) based on the first reflected wave and setting the coordinate as a first coordinate,
obtaining a coordinate of the second object with respect to the vehicle based on the second reflected wave and setting the coordinate as a second coordinate, and
obtaining a position difference (P) between the first coordinate and the second coordinate,
wherein the determination unit (203) is configured to use, for the object detection, the first and second reflected waves when the difference (D) between the first distance and the second distance is equal to or less than the first predetermined threshold and the position difference (P) between the first coordinate and the second coordinate is equal to or less than a second predetermined threshold,
wherein, when the difference (D) between the first distance and the second distance exceeds the first predetermined threshold or the position difference (P) between the first coordinate and the second coordinate exceeds the second predetermined threshold,
the determination unit (203) is configured not to use (step S109, Yes), for the object detection, the first and second reflected waves, which means that these are filtered and removed (S110), when also the reflection intensities of the first and second reflected waves are less than a third threshold that is set to a value larger than the automatic threshold for detecting a single reflected wave,
and the determination unit (203) is configured to use (step S109, No), for the object detection, the first and second reflected waves, when also their reflection intensities are equal to or more than the third threshold of the single reflected wave (step S109: No).

## Patentansprüche

1. Objekterfassungsvorrichtung (20) eines Fahrzeugs mit:
einer Erfassungseinheit (201), die in dem Fahrzeug (10) bereitgestellt ist und konfiguriert ist, zu erfassen, dass eine reflektierte Welle (RFa, RFb, RFc, RFd und RFe), die durch ein Objekt (M) um das Fahrzeug (10) herum reflektiert wird, durch eine Entfernungsmesseinheit (14) empfangen wird, die in dem Fahrzeug (10) beinhaltet ist, und die konfiguriert ist, eine Schallwelle oder eine Funkwelle zu übertragen und zu empfangen, und die Informationen über die empfangene reflektierte Welle zu der Objekterfassungsvorrichtung (20) ausgibt;
einer Berechnungseinheit (202), die konfiguriert ist, eine Position des Objekts (M) in Bezug auf das Fahrzeug (10) auf der Grundlage der reflektierten Welle (RFa, RFb, RFc, RFd und RFe) zu erhalten; und
einer Bestimmungseinheit (203), die konfiguriert ist, zu bestimmen, ob die reflektierte Welle (RFa, RFb, RFc, RFd und RFe) für eine Objekterfassung auf der Grundlage eines Berechnungsergebnisses der Berechnungseinheit (202) zu verwenden ist, wobei,
wenn die reflektierte Welle (RFa, RFb, RFc, RFd und RFe) eine reflektierte Welle ist, die einen automatischen Schwellenwert überschreitet, wobei der automatische Schwellenwert auf der Grundlage eines Hintergrundrauschens eingestellt wird, das auf der Grundlage der reflektierten Welle (RFa, RFb, RFc, RFd und RFe) unter Verwendung von Algorithmen einer Konstante-Fehlalarmrate-Verarbeitung bzw. CFAR-Verarbeitung berechnet wird, wobei die reflektierte Welle (RFa, RFb, RFc, RFd und RFe) eine erste reflektierte Welle, die durch ein erstes Objekt reflektiert wird, und eine zweite reflektierte Welle umfasst, die durch ein zweites Objekt reflektiert wird, die zur gleichen Zeit empfangen werden, die Berechnungseinheit (202) konfiguriert ist,
eine erste Verarbeitung auszuführen, die
ein Erhalten einer Entfernung zwischen dem ersten Objekt und dem Fahrzeug (10) auf der Grundlage der ersten reflektierten Welle und ein Einstellen der Entfernung als eine erste Entfernung,
ein Erhalten einer Entfernung zwischen dem zweiten Objekt und dem Fahrzeug (10) auf der Grundlage der zweiten reflektierten Welle und ein Einstellen der Entfernung als eine zweite Entfernung und
ein Erhalten einer Differenz zwischen der ersten Entfernung und der zweiten Entfernung umfasst,
**dadurch gekennzeichnet, dass**
die Berechnungseinheit (202) konfiguriert ist,
wenn in der ersten Verarbeitung die Differenz (D) zwischen der ersten Entfernung und der zweiten Entfernung kleiner oder gleich einem ersten vorbestimmten Schwellenwert ist, eine zweite Verarbeitung auszuführen, die umfasst:
ein Erhalten einer Koordinate des ersten Objekts in Bezug auf das Fahrzeug (10) auf der Grundlage der ersten reflektierten Welle und ein Einstellen der Koordinate als eine erste Koordinate,
ein Erhalten einer Koordinate des zweiten Objekts in Bezug auf das Fahrzeug auf der Grundlage der zweiten reflektierten Welle und ein Einstellen der Koordinate als eine zweite Koordinate, und
ein Erhalten einer Positionsdifferenz (P) zwischen der ersten Koordinate und der zweiten Koordinate,
wobei die Bestimmungseinheit (203) konfiguriert ist, für die Objekterfassung die ersten und zweiten reflektierten Wellen zu verwenden, wenn die Differenz (D) zwischen der ersten Entfernung und der zweiten Entfernung kleiner oder gleich dem ersten vorbestimmten Schwellenwert ist und die Positionsdifferenz (P) zwischen der ersten Koordinate und der zweiten Koordinate kleiner oder gleich einem zweiten vorbestimmten Schwellenwert ist,
wobei, wenn die Differenz (D) zwischen der ersten Entfernung und der zweiten Entfernung den ersten vorbestimmten Schwellenwert überschreitet oder die Positionsdifferenz (P) zwischen der ersten Koordinate und der zweiten Koordinate den zweiten vorbestimmten Schwellenwert überschreitet,
die Bestimmungseinheit (203) konfiguriert ist, für die Objekterfassung nicht die ersten und zweiten reflektierten Wellen zu verwenden (Schritt S109, Ja), was bedeutet, dass diese gefiltert und entfernt werden (S110), wenn auch die Reflexionsintensitäten der ersten und zweiten reflektierten Wellen kleiner als ein dritter Schwellenwert sind, der auf einen Wert eingestellt wird, der größer als der automatische Schwellenwert für eine Erfassung einer einzelnen reflektierten Welle ist, und
die Bestimmungseinheit (203) konfiguriert ist, für die Objekterfassung die ersten und zweiten reflektierten Wellen zu verwenden (Schritt S109, Nein), wenn auch zugehörige Reflexionsintensitäten größer oder gleich dem dritten Schwellenwert der einzelnen reflektierten Welle sind (Schritt S109: Nein).

## Revendications

1. Dispositif de détection d'objet (20) d'un véhicule comprenant :
une unité de détection (201) prévue dans le véhicule (10) et configurée pour détecter la réception d'une onde réfléchie (RFa, RFb, RFc, RFd, et RFe), qui est réfléchie par un objet (M) se trouvant dans les alentours du véhicule (10), par une unité de mesure de distance (14) incluse dans le véhicule (10) qui est configurée pour émettre et recevoir une onde sonore ou une onde radio et qui délivre des informations au dispositif de détection d'objet (20) sur l'onde réfléchie reçue ;
une unité de calcul (202) configurée pour obtenir une position de l'objet (M) par rapport au véhicule (10) sur la base de l'onde réfléchie (RFa, RFb, RFc, RFd, et RFe) ; et
une unité de détermination (203) configurée pour déterminer s'il faut utiliser l'onde réfléchie (RFa, RFb, RFc, RFd, et RFe) pour la détection d'objet sur la base d'un résultat de calcul de l'unité de calcul (202), dans lequel
lorsque l'onde réfléchie (RFa, RFb, RFc, RFd, et RFe) est une onde réfléchie qui dépasse un seuil automatique, le seuil automatique étant défini sur la base d'un bruit de fond calculé en fonction de l'onde réfléchie (RFa, RFb, RFc, RFd, et RFe) à l'aide d'algorithmes de traitement de taux de fausse alarme constant, CFAR [pour *constant false alarm rate,* TFAC en français], l'onde réfléchie (RFa, RFb, RFc, RFd, et RFe) comportant une première onde réfléchie qui est réfléchie par un premier objet et une deuxième onde réfléchie qui est réfléchie par un deuxième objet qui sont reçues en même temps, l'unité de calcul (202) est configurée pour effectuer un premier processus comprenant les étapes suivantes
obtenir une distance entre le premier objet et le véhicule (10) sur la base de la première onde réfléchie et définir cette distance comme une première distance,
obtenir une distance entre le deuxième objet et le véhicule (10) sur la base de la deuxième onde réfléchie et définir cette distance comme une deuxième distance, et
obtenir une différence entre la première distance et la deuxième distance,
**caractérisé en ce que**
dans le premier processus, lorsque la différence (D) entre la première distance et la deuxième distance est égale ou inférieure à un premier seuil prédéterminé, l'unité de calcul (202) est configurée pour effectuer un deuxième processus comprenant les étapes suivantes
obtenir une coordonnée du premier objet par rapport au véhicule (10) sur la base de la première onde réfléchie et définir cette coordonnée comme une première coordonnée,
obtenir une coordonnée du deuxième objet par rapport au véhicule sur la base de la deuxième onde réfléchie et définir cette coordonnée comme une deuxième coordonnée, et
obtenir une différence de position (P) entre la première coordonnée et la deuxième coordonnée,
dans lequel l'unité de détermination (203) est configurée pour utiliser les première et deuxième ondes réfléchies pour la détection d'objet lorsque la différence (D) entre la première distance et la deuxième distance est égale ou inférieure au premier seuil prédéterminé et que la différence de position (P) entre la première coordonnée et la deuxième coordonnée est égale ou inférieure à un deuxième seuil prédéterminé,
dans lequel, lorsque la différence (D) entre la première distance et la deuxième distance dépasse le premier seuil prédéterminé ou la différence de position (P) entre la première coordonnée et la deuxième coordonnée dépasse le deuxième seuil prédéterminé,
l'unité de détermination (203) est configurée pour ne pas utiliser (step 109, Yes) [étape S109, Oui] les première et deuxième ondes réfléchies pour la détection d'objet, ce qui signifie que celles-ci sont filtrées et supprimées (S110) lorsque les intensités de réflexion des première et deuxième ondes réfléchies sont également inférieures à un troisième seuil qui est fixé à une valeur supérieure au seuil automatique pour détecter une onde réfléchie unique, et l'unité de détermination (203) est configurée pour utiliser (step S109, No) [étape S109, Non] les première et deuxième ondes réfléchies pour la détection d'objet lorsque leurs intensités de réflexion sont également égales ou supérieures au troisième seuil de l'onde réfléchie unique (step S109: No).
